# EUROPÄISCHE PATENTSCHRIFT

(11) **EP 3 034 905 B1**
(45) Veröffentlichungstag und Bekanntmachung des Hinweises auf die Patenterteilung: **11.07.2018**
(21) Anmeldenummer: 14197875.9
(22) Anmeldetag: 15.12.2014
(51) Int. Cl.: F16F 15/023, F16F 15/027

(54) **Federsystem zur schwingungsisolierenden Lagerung**
Spring system for oscillation insulating bearing
Système de ressort destiné à amortir les oscillations

(43) Veröffentlichungstag der Anmeldung: 22.06.2016
(73) Patentinhaber: G + H Schallschutz GmbH, 67063 Ludwigshafen/Rhein (DE)
(72) Erfinder: Schulz, Markus, 68623 Lampertheim (DE)
(74) Vertreter: Grünecker Patent- und Rechtsanwälte PartG mbB

(56) Entgegenhaltungen:
- EP-A1- 2 623 816
- EP-A2- 0 306 040
- EP-A2- 1 142 733
- US-A1- 2006 272 910
- US-A1- 2009 189 407

## Beschreibung

Die Erfindung betrifft ein Federsystem zur schwingungsisolierenden Lagerung, insbesondere von Maschinen, Anlagen, Prüfständen, Maschinenfundamenten und/oder Gebäuden.

Solche Federsysteme sind bereits aus dem Stand der Technik bekannt. US 2006/0272910A1 offenbart ein solches Federsystem. Zum einen ist bekannt zur Federung Stahlfedern zu verwenden, die eine hohe Lastaufnahme ermöglichen. Stahlfedern können mit einem gewünschten Verhältnis von der vertikalen zur horizontalen Steifigkeit gefertigt werden, indem ein entsprechendes Material und eine entsprechende Geometrie der Stahlfeder gewählt werden. Insbesondere kann so sogar die horizontale Steifigkeit größer als die vertikale Steifigkeit sein. Außerdem sind Stahlfedern nicht wartungsintensiv und haben eine hohe Lebensdauer. Im Gegensatz zu Luftfedern ist für die Federfunktion auch keine Zufuhr von Druckluft nötig, was Kosten für die Bereitstellung von Druckluft spart und nicht den Nachteil hat, dass die Isolierwirkung bei Unterbrechung der Druckluftversorgung ausfällt. Somit sind Stahlfedern kostengünstig und zuverlässig. Stahlfedern haben jedoch den Nachteil, dass sie nur manuell höhenverstellbar sind und dass ihr Dämpfungsgrad gering ist, typischerweise etwa 0,01.

Es sind auch bereits Viskositätsdämpfer bekannt, die eine geschwindigkeitsproportionale Dämpfung mittels eines viskosen Dämpfungsmediums ermöglichen, wobei der Dämpfungsgrad in vertikaler Richtung variabel zwischen 0,003 bis 0,9 liegt. Diese Systeme sind wartungsarm und erfordern keine externe Medienversorgung, was sie relativ stabil und kostengünstig macht. Die Dämpfung kann jedoch nicht automatisch gesteuert und/oder geregelt werden.

Als Alternative sind auch Luftfedersysteme bekannt, die mittels zugeführter Druckluft betrieben werden. Sie ermöglichen eine automatische Höhenverstellung. Luftfedersysteme sind jedoch teurer als Stahlfeder- oder Viskositätsdämpfungssysteme, einerseits wegen der erforderlichen Druckluftversorgung, andererseits, da sie wartungsintensiver sind. Zudem ist bei einem Ausfall der Druckluftversorgung keine schwingungsisolierte Lagerung mehr gegeben. Ein weiteres Problem besteht darin, dass die horizontale Steifigkeit nicht beliebig einstellbar ist und typischerweise gering ist, insbesondere im Vergleich zur vertikalen Steifigkeit. Der typische Dämpfungsgrad in vertikaler Richtung liegt zwischen 0,03 bis 0,15.

Es ist daher Aufgabe der Erfindung, ein zuverlässiges, kostengünstiges und zugleich flexibel einsetzbares Federsystem bereitzustellen.

Diese Aufgabe wird bei dem Federsystem der eingangs genannten Art erfindungsgemäß dadurch gelöst, dass das Federsystem in Form einer Kombination aus einem Luftfedersystem mit mindestens einer Luftfeder und/oder einem Viskositätsdämpfungssystem und/oder einem mechanischen Federsystem mit mindestens einer mechanischen, insbesondere Stahl-, Feder, insbesondere einem Schraubenfedersystem, ausgebildet ist

Durch die Kombination eines mechanischen Federsystems und eines Luftfedersystems können die Vorteile von Luftfedern, wie zum Beispiel die Steuerbarkeit, erhalten werden und es wird nur ein kleineres Luftfedersystem benötigt, welches nur die zu erwartenden Laständerungen (z. B. resultierend aus Verkehrslast) aufnimmt, so dass das Federsystem insgesamt kostengünstiger ist als ein reines Druckluftfedersystem. Bei Ausfall der Druckluftversorgung und/oder bei Schäden am Luftfedersystem ist die Anlage weiterhin schwingungsisoliert gelagert ist. Wird zusätzlich ein Viskositätsdämpfungssystem verwendet, kann der System-Dämpfungsgrad bei Bedarf größer als 0,15 designt werden. Aufgrund der Kombination von Luftfedern und mechanischen Federn wird eine Stabilisierung des Gesamtsystems in horizontaler Richtung ermöglicht.

Horizontal ist im Folgenden eine Ebene parallel zur Standfläche (die Standfläche im bestimmungsgemäßen Gebrauch) und vertikal bezieht sich im Folgenden auf eine Ebene senkrecht zur Standfläche. Schwingungsisolierung bezieht sich auf das Verringern der Schwingungsübertragung von einem Körper auf einen anderen Körper.

Die Schraubenfedern sind typischerweise Stahlfedern, es kann jedoch auch anderes Material verwendet werden, beispielsweise ein anderes Metall. Das mechanische Federsystem kann zum Tragen der Hauptlast und/oder zu einer horizontalen Stabilisierung ausgebildet und/oder angeordnet ist.

Ein Viskositätsdämpfungssystem umfasst typischerweise pro Viskositätsdämpfer ein feststehendes Teil, das als rohrförmiges Gehäuse zur Führung eines beweglichen Teils ausgebildet ist, wobei das bewegliche Teil einen Stoß aufnimmt und sich in eine viskose Flüssigkeit bewegt, die dann aufgrund eines Druckunterschieds beispielsweise durch Drosselkanäle von einer Kammer in eine andere Kammer bewegt wird. Ein solches Dämpfungssystem wird auch als Hydraulikdämpfungssystem bezeichnet.

Das mechanische Federsystem kann zum Tragen der Hauptlast und/oder zu einer horizontalen Stabilisierung ausgebildet und/oder angeordnet sein. Alternativ oder zusätzlich kann das Luftfedersystem zum Aufnehmen und/oder zum Regeln von variablen Lasten ausgebildet und/oder angeordnet sein. Insbesondere kann die Hauptlast (meistens die Eigenlast) von dem mechanischen Federsystem aufgenommen und die variablen Lasten und/oder Zusatzlasten (meistens Verkehrslasten) können von dem Luftfedersystem und/oder dem Viskositätsdämpfungssystem aufgenommen und geregelt werden.

Im Folgenden stehen die Ausdrücke "die Luftfeder" und "die mechanischen Feder" beim Vorhandensein von mehreren Luftfedern bzw. mechanischen Federn jeweils für "eine der, mehrere oder alle Luftfedern" bzw. "eine der, mehrere oder alle mechanischen Federn".

Das Federsystem das Luftfedersystem kann eine Druckluftversorgung zum Versorgen des Luftfedersystems mit Druckluft umfassen. Die Druckluftversorgung kann insbesondere mittels einer Steuer- und/oder Regeleinrichtung steuerbar und/oder regelbar sein. Insbesondere kann die Druckluftversorgung für die Luftfeder ein Stellelement, beispielsweise ein Ventil, zum Einstellen der Druckluftzufuhr umfassen, welches insbesondere mittels der Steuer- und/oder Regeleinrichtung steuerbar und/oder regelbar ist.

Das Luftfedersystem kann automatisch höhenverstellbar sein, insbesondere durch Steuern bzw. Regeln der Druckluftversorgung. Alternativ oder zusätzlich kann das mechanische Federsystem, insbesondere die mechanische Feder, manuell höhenverstellbar sein. Das Luftfedersystem kann zur Höhenregelung ausgebildet und/oder angeordnet sein, insbesondere derart, dass das Höhenniveau bei schwankenden Lasten im Wesentlichen gleich bleibt.

Die Luftfeder kann als Balg-Luftfeder, als Gürtelrollbalg-Luftfeder, als Rollbalg-Luftfeder oder als Membran-Luftfeder ausgebildet sein. Die Luftfeder kann eine Deckplatte und einen Kolben umfassen, der insbesondere aus einem Aluminiumguss besteht, wobei zwischen der Deckplatte und dem Kolben ein Balg, insbesondere ein Gürtelrollbalg, angeordnet ist, der insbesondere ein elastisches Material umfasst, beispielsweise einen Elastomerwerkstoff mit einvulkanisiertem Drahtgürtel. Elastomerwerkstoffe sind bei Zug- und Druckbelastung elastisch verformbarer Kunststoffe, deren Glasübergangspunkt sich unterhalb der Einsatztemperatur befindet. Beispiele dafür sind Vulkanisate von Naturkautschuk und Silikonkautschuk.

Die horizontale Steifigkeit des Federsystems kann größer oder gleich der vertikalen Steifigkeit des Federsystems sein. Der Dämpfungsgrad des Federsystems in vertikaler Richtung kann variabel einstellbar, insbesondere steuerbar und/oder regelbar, sein, beispielsweise durch Variieren der Druckluftzufuhr. Der variable Dämpfungsgrad des Federsystems kann zum Beispiel im Bereich von 0,03 bis 0,9 liegen. Die horizontale Steifigkeit des Luftfedersystems kann kleiner oder gleich der vertikalen Steifigkeit des Luftfedersystems sein.

Die Luftfeder bzw. Luftfedern und/oder die Dämpfungselemente des Viskositätsdämpfungssystems und die mechanische Feder bzw. Federn sind derart gewählt, dass sich die Dämpfungscharakteristiken und/oder Steifigkeitscharakteristiken des Luftfedersystems und/oder des Viskositätsdämpfungssystems und des mechanischen Federsystems bezogen auf eine genormte Krafteinwirkung auf das Federsystem teilweise überlappen.

Dies hat den Vorteil, dass sich durch Aufaddieren der Dämpfungs- und Steifigkeitscharakteristiken eine vorteilhafte Dämpfungs- und Steifigkeitscharakteristik des gesamten Federsystems ergibt, die durch die Einzelelemente so nicht zu erzielen wäre. Insbesondere kann die Dämpfungscharakterisik über einen großen Wertebereich für die Krafteinwirkung linear sein und die Federsteifigkeit optimal an die Notwendigkeiten angepasst werden.

Dabei wird kann die Dämpfungscharakteristik beispielsweise durch den Dämpfungsgrad beschrieben werden. Der Dämpfungsgrad (Systemdämpfung) berechnet sich aus den Faktoren Dämpfungskoeffizient, Federsteife und abgefederte Masse. Die Steifigkeitscharakteristik kann durch das Isolationsverhalten, beispielsweise durch den Isolationswirkungsgrad, beschrieben werden. Der Isolationswirkungsgrad einer schwingungsisolierten Lagerung wird aus dem Frequenzverhältnis (Störfrequenz zu Eigenfrequenz des Systems) und den Dämpfungsgrad berechnet. Der Dämpfungsgrad (Systemdämpfung) und die Abstimmfrequenz (Resonanzfrequenz) der schwingungsisolierten Lagerung bilden die Grundlage für zwei verschiedene Wirk- und Regelmechanismen.

Das Viskositätsdämpfungssystem kann zur geschwindigkeits-proportionalen Dämpfung mittels eines viskosen Dämpfungsmediums ausgebildet sein, wobei das Viskositätsdämpfungssystem einen variablen Dämpfungsgrad aufweist.

Die Erfindung stellt auch eine Verwendung eines der oben beschriebenen Federsysteme zur schwingungsisolierenden Lagerung einer Maschine, einer Anlage, eines Prüfstands, eines Maschinenfundaments und/oder eines Gebäudes bereit.

Die Verwendung des Systems kann umfassen, dass bei der Luftfeder Druckluft aus der Druckluftversorgung in den Balg eingebracht und dort eingeschlossen wird, wobei der Balg mit der Deckplatte und dem Kolben luftdicht verbunden ist. Im Falle eines Rollbalgs ist der Rollbalg über den Kolben gestülpt und rollt unter Druck auf diesen ab. Insbesondere kann die Verwendung ein Steuern und/oder Regeln der Druckluftversorgung, insbesondere der Stelleinrichtungen, mit der Regel und/oder Steuereinrichtung umfassen. Das Steuern und/oder Regeln der Druckluftversorgung kann insbesondere derart erfolgen, dass das Höhenniveau der Last eingestellt und/oder gesteuert und/oder geregelt wird, insbesondere im Betrieb unabhängig von der Last konstant gehalten wird.

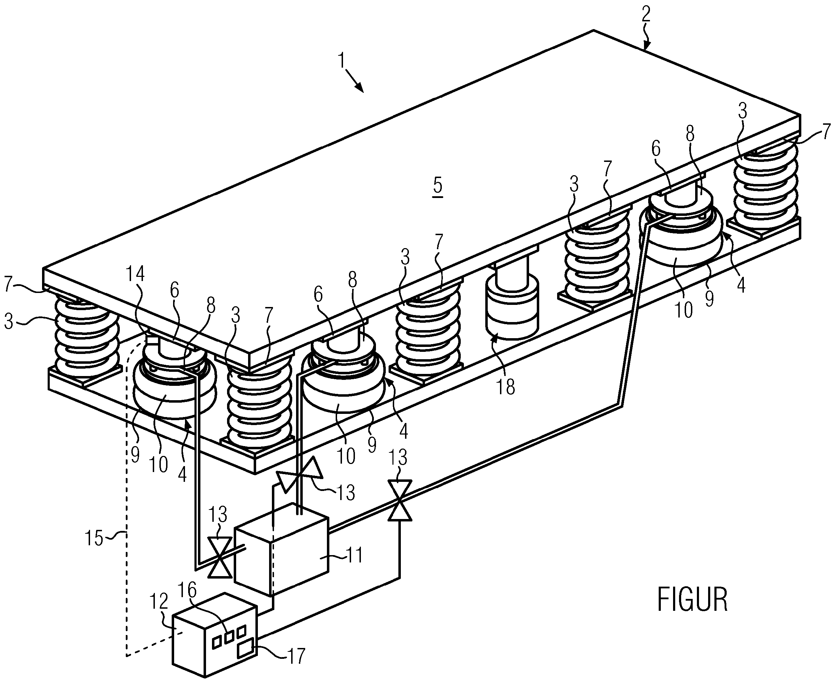

Weitere Merkmale und Vorteile der Erfindung werden nachfolgend anhand der einzigen Figur weiter erläutert.

Dabei zeigt die Figur eine schematische, nicht maßstabsgetreue Darstellung einer Ausführungsform des Federsystems. In der Figur ist ein Federsystem 1 gezeigt, mit dem in diesem Beispiel ein Prüfstand 2 schwingungsisoliert gelagert ist. Das Federsystem umfasst mehrere im Bezug zur Standfläche des Prüfstands vertikal angeordnete zylinderförmige Stahlschraubenfedern 3, das heißt, Schraubenfedern, deren Zylinderachse im Wesentlichen senkrecht zur Standfläche ist. Das Federsystem umfasst weiterhin mehrere Luftfedern 4, die hier zylinderförmig und ebenfalls vertikal zur Standfläche angeordnet sind, also Luftfedern mit einer zur Standfläche im Wesentlichen senkrechten Zylinderachse. Wie hier gezeigt ist, sind an den Ecken der Unterseite der Prüfstandgrundplatte 5 jeweils Stahlfedern angeordnet. An der Unterseite der Prüfstandgrundplatte sind zudem entlang der Kanten Luftfedern und weitere Stahlfedern angeordnet. Jede Luftfeder ist mit der Grundplatte über eine Verbindung 6, hier beispielsweise umfassend eine Platte und eine Stange, verbunden und die Stahlfedern sind mit der Grundplatte je über eine Platte 7 verbunden.

Die Luftfedern umfassen jeweils eine Deckplatte 8 und einen Kolben 9, der hier aus einem Aluminiumguss gefertigt ist. Zwischen der Deckplatte und dem Kolben ist ein Gürtelrollbalg 10 angeordnet, der einen Elastomerwerkstoff mit einvulkanisiertem Drahtgürtel umfasst. Es ist nur der unterste Teil des Kolbens 9 angedeutet, da dieser durch den Gürtelrollbalg überlappt wird. An den Gürtelrollbalg ist eine Druckluftversorgung 11, beispielsweise ein Kompressor, angeschlossen, hier beispielsweise über Schläuche. Eine Steuer- und Regeleinrichtung 12 ist mit Stelleinrichtungen 13, hier in Form von Ventilen an den Schläuchen, verbunden und kann deren Stellung steuern und regeln.

Um einen Regelkreis zu ermöglichen ist ein Drucksensor 14 an jeder Luftfeder angeordnet, der den Druck auf die Luftfeder misst und die Werte an die Steuer- und Regeleinrichtung über eine Datenverbindung 15 sendet. Die Datenverbindung kann kontaktlos oder kontaktgebunden sein. Hier ist sie beispielhaft kontaktlos und daher gestrichelt dargestellt. Der Drucksensor ist jedoch optional vorgesehen. Alternativ oder zusätzlich kann ein Sensor vorgesehen sein, der andere Parameter als den Druck misst und der die Messwerte an die Steuer- und Regeleinrichtung sendet.

Die Steuer- und Regeleinrichtung umfasst Bedienelemente 16, hier Knöpfe, und ein Anzeigeelement 17, hier ein Display. Über die Bedienelemente kann ein Benutzer das Luftfedersystem, insbesondere jede Luftfeder, steuern, beispielsweise die Höhe einstellen. Das Anzeigeelement kann dem Benutzer beispielsweise die eingestellten Werte anzeigen. Die Bedienelemente können auch anderweitig ausgebildet sein oder mit dem Anzeigeelement eine Einheit bilden, beispielsweise in Form eines Touch-Screens. Die Steuer- und Regeleinrichtung kann in einen Rechner integriert sein und weist dann keine eigenen Eingabeelemente und kein eigenes Anzeigeelement auf.

Hier ebenfalls dargestellt sind optionale Viskositätsdämpfer 18, die ein viskoses Dämpfungsmedium enthalten, hier beispielsweise Öl, und so eine geschwindigkeitsproportionale Dämpfung erlauben.

Das oben beschriebene oder ein anderes Dämpfungssystem können folgendermaßen schwingungsisolierenden Lagerung verwendet werden: Die Last, beispielsweise der Prüfstand, wird hauptsächlich durch die Schraubenfedern gehalten, wobei die Schraubenfedern grob die Höhe des Prüfstands vorgeben. Falls Viskositätsdämpfer vorgesehen sind, sind diese so gewählt, dass ihre Nullage etwa der Nullage der Schraubenfedern entspricht. Die Luftfedern werden nun mit Druckluft versorgt, indem an der Druckluftversorgung direkt oder an der Steuer- und Regeleinrichtung eingestellt wird, wie viel Druckluft dem jeweiligen Balg zugeführt werden soll. So kann die genaue Höhe des Prüfstandes und auch die Stärke der Dämpfung des Federsystems eingestellt werden. Im Betrieb werden Stöße und Lastschwankungen durch die Schraubenfedern, die Viskositätsdämpfer und die Luftfedern gedämpft. Die Drucksensoren erfassen Druckänderungen aufgrund von Stößen und Laständerungen. Basierend auf den Messwerten steuert die Steuer- und Regeleinrichtung die Ventile an, so dass die Druckluftversorgung zu jeder einzelnen Feder automatisch separat eingestellt wird, beispielsweise durch Drosseln oder Öffnen der jeweiligen Ventile. Die Regelung erfolgt idealerweise so, dass die Höhe des Prüfstands sich auch bei Laständerung nicht verändert. Theoretisch müssen die Luftfedern bzw. die entsprechenden Ventile nicht separat angesteuert werden.

Die Luftfedern 4, 6, 8, 9, 10 können auch zusammen mit den Dämpfern 18 und den Stahlschraubenfedern

3 und 7 in einer gemeinsamen Baugruppe oder in einem gemeinsamen Gehäuse mit oberer und unterer Anschluss- oder Befestigungsplatte integriert, verbaut und/oder kombiniert sein.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Federsystem (1) zur schwingungsisolierenden Lagerung, insbesondere von Maschinen, Anlagen, Prüfständen (2), Maschinenfundamenten und/oder Gebäuden,
**dadurch gekennzeichnet, dass**
das Federsystem (1) in Form einer Kombination aus einem Luftfedersystem, umfassend mindestens eine Luftfeder (4), und/oder einem Viskositätsdämpfungssystem (18) und einem mechanischen Federsystem mit mindestens einer mechanischen Feder, insbesondere einem Schraubenfedersystem, ausgebildet ist,
wobei die Luftfeder bzw. Luftfedern (4) und/oder die Dämpfungselemente des Viskositätsdämpfungssystems (18) und die mechanische Feder bzw. Federn derart gewählt sind, dass sich die Dämpfungscharakteristiken des Luftfedersystems und/oder des Viskositätsdämpfungssystems (18) und des mechanischen Federsystems bezogen auf eine genormte Krafteinwirkung auf das Federsystem (1) teilweise überlappen.

2. Federsystem (1) nach Anspruch 1, wobei das Federsystem (1) das mechanische Federsystem umfasst und das mechanische Federsystem zum Tragen der Hauptlast und/oder zu einer horizontalen Stabilisierung ausgebildet und/oder angeordnet ist.

3. Federsystem (1) nach Anspruch 1 oder 2, wobei das Federsystem (1) das Luftfedersystem umfasst und wobei das Luftfedersystem zum Aufnehmen und/oder zum Regeln von variablen Lasten ausgebildet und/oder angeordnet ist.

4. Federsystem (1) nach einem der vorangegangenen Ansprüche, wobei das Federsystem (1) das Luftfedersystem umfasst, umfassend eine Druckluftversorgung (11) zum Versorgen des Luftfedersystems mit Druckluft, insbesondere eine mittels einer Steuer- und/oder Regeleinrichtung (12) steuerbare und/oder regelbare Druckluftversorgung (11).

5. Federsystem (1) nach Anspruch 4, wobei das Federsystem (1) das Luftfedersystem umfasst und wobei die Druckluftversorgung (11) für die Luftfeder (4) ein Stellelement (13), beispielsweise ein Ventil, zum Einstellen der Druckluftzufuhr umfasst, welches, insbesondere mittels der Steuer- und/oder Regeleinrichtung (12), steuerbar und/oder regelbar ist.

6. Federsystem (1) nach einem der vorangegangenen Ansprüche, wobei das Federsystem (1) das Luftfedersystem umfasst und das Luftfedersystem automatisch höhenverstellbar ist, insbesondere durch Steuern bzw. Regeln der Druckluftversorgung (11), und/oder wobei das mechanische Federsystem, insbesondere die mechanische Feder, manuell höhenverstellbar ist.

7. Federsystem (1) nach einem der vorangegangenen Ansprüche, wobei das Federsystem (1) das Luftfedersystem umfasst und wobei das Luftfedersystem zur Höhenregelung ausgebildet und/oder angeordnet ist, insbesondere derart, dass das Höhenniveau bei schwankenden Lasten im Wesentlichen gleich bleibt.

8. Federsystem nach (1) einem der vorangegangenen Ansprüche, wobei das Federsystem (1) das Luftfedersystem umfasst und wobei die Luftfeder (4) als Balg-Luftfeder, als Gürtelrollbalg-Luftfeder, als Rollbalg-Luftfeder oder als Membran-Luftfeder ausgebildet ist.

9. Federsystem (1) nach einem der vorangegangenen Ansprüche, wobei das Federsystem (1) das Luftfedersystem umfasst und wobei die Luftfeder (4) eine Deckplatte (8) und einen Kolben (9) umfasst, wobei zwischen der Deckplatte (8) und dem Kolben (9) ein Balg (10) angeordnet ist, der insbesondere ein elastisches Material umfasst, beispielsweise einen Elastomerwerkstoff mit einvulkanisiertem Drahtgürtel.

10. Federsystem (1) nach einem der vorangegangenen Ansprüche, wobei das Federsystem (1) das Luftfedersystem umfasst und wobei die horizontale Steifigkeit des Luftfedersystems kleiner oder gleich der vertikalen Steifigkeit des Luftfedersystems ist.

11. Federsystem (1) nach einem der vorangegangenen Ansprüche,
wobei die horizontale Steifigkeit des Federsystems größer oder gleich der vertikalen Steifigkeit des Federsystems (1) ist, und/oder
wobei der Dämpfungsgrad des Federsystems (1) in vertikale Richtung variabel einstellbar, insbesondere steuerbar und/oder regelbar, ist.

12. Federsystem (1) nach einem der vorangegangenen Ansprüche umfassend das Viskositätsdämpfungssystem (18) zur geschwindigkeits-proportionalen Dämpfung mittels eines viskosen Dämpfungsmediums, wobei das Viskositätsdämpfungssystem einen variablen Dämpfungsgrad aufweist.

13. Verwendung des Federsystems (1) nach einem der vorangegangen Ansprüche zur schwingungsisolierenden Lagerung einer Maschine, einer Anlage, eines Prüfstands (2), eines Maschinenfundaments und/oder eines Gebäudes.

14. Verwendung des Federsystems (1) nach Anspruch 13, wobei das Federsystem (1) das Luftfedersystem, die Druckluftversorgung (11) und die Steuer- und/oder Regeleinrichtung (12) umfasst, umfassend Regeln und/oder Steuern der Druckluftversorgung (11) derart, dass das Höhenniveau der Last eingestellt und/oder gesteuert und/oder geregelt wird, insbesondere im Betrieb konstant gehalten wird.

## Claims

1. A spring system (1) for a vibration-insulating bearing, in particular of machines, facilities, test stands (2), machine foundations and/or buildings,
**characterized in that**
the spring system (1) is designed as a combination of an air spring system, including at least one air spring (4), and/or a viscous damping system (18) and a mechanical spring system with at least one mechanical spring, in particular one spiral spring system,
wherein the air spring or air springs (4) and/or the damping elements of the viscous damping system (18) and the mechanical spring or springs are chosen in such a manner that the damping characteristics of the air spring system and/or of the viscous damping system (18) and of the mechanical spring system with regard to a standardized force application on the spring system (1) partially overlap.

2. The spring system (1) according to claim 1, wherein the spring system (1) includes the mechanical spring system and the mechanical spring system is designed and/or arranged to carry the main load and/or for horizontal stabilization.

3. The spring system (1) according to claim 1 or 2, wherein the spring system (1) includes the air spring system and wherein the air spring system is designed and/or arranged to absorb and/or to closed-loop control variable loads.

4. The spring system (1) according to one of the afore-mentioned claims, wherein the spring system (1) includes the air spring system, including a pressurized air supply (11) for supplying the air spring system with pressurized air, in particular a pressurized air supply (11) that is open-loop and/or closed-loop controllable by means of an open-loop and/or closed-loop control device (12).

5. The spring system (1) according to claim 4, wherein the spring system (1) includes the air spring system and wherein the pressurized air supply (11) for the air spring (4) includes an adjustment element (13), for example a valve, for adjusting the pressurized air supply, which is open-loop and/or closed-loop controllable, in particular by means of the open-loop and/or closed-loop control device (12).

6. The spring system (1) according to one of the afore-mentioned claims, wherein the spring system (1) includes the air spring system and the air spring system is automatically adjustable in height, in particular by open-loop or closed-loop control of the pressurized air supply (11), and/or wherein the mechanical spring system, in particular the mechanical spring is manually adjustable in height.

7. The spring system (1) according to one of the afore-mentioned claims, wherein the spring system (1) includes the air spring system and wherein the air spring system is designed and/or arranged for height adjustment, in particular in such a manner that the height level remains substantially the same in case of varying loads.

8. The spring system (1) according to one of the afore-mentioned claims, wherein the spring system (1) includes the air spring system and wherein the air spring (4) is designed as a bellows air spring, as a belt roll bellows air spring, as a roller air spring or as a membrane air spring.

9. The spring system (1) according to one of the afore-mentioned claims, wherein the spring system (1) includes the air spring system and wherein the air spring (4) includes a cover plate (8) and a piston (9), wherein a bellows (10), which includes in particular an elastic material, for example an elastomer material with a wire belt vulcanized into it, is arranged between the cover plate (8) and the piston (9).

10. The spring system (1) according to one of the afore-mentioned claims, wherein the spring system (1) includes the air spring system and wherein the horizontal rigidity of the air spring system is smaller or equal to the vertical rigidity of the air spring system.

11. The spring system (1) according to one of the afore-mentioned claims,
wherein the horizontal rigidity of the spring system is greater or equal to the vertical rigidity of the spring system (1) and/or
wherein the damping ratio of the spring system (1) is variably adjustable, in particular open-loop and/or closed-loop controllable, in the vertical direction.

12. The spring system (1) according to one of the afore-mentioned claims, including the viscous damping system (18) for speed-proportional damping by means of a viscous damping medium, wherein the viscous damping system has a variable damping ratio.

13. A use of the spring system (1) according to one of the afore-mentioned claims for mounting a machine, a facility, a test stand (2), a machine foundation and/or a building in a vibration-insulating manner.

14. The use of the spring system (1) according to claim 13, wherein the spring system (1) includes the air spring system, the pressurized air supply (11) and the open-loop and/or closed-loop control system (12), including closed-loop and/or closed-loop control of the pressurized air supply (11) in such a manner that the height level of the load is adjusted and/or open-loop and/or closed-loop controlled, in particular maintained constant during operation.

## Revendications

1. Système de ressort (1) pour un montage amortissant les vibrations, en particulier de machines, d'installations, de bancs d'essai (2), de fondations de machine et/ou de bâtiments, **caractérisé en ce que**
le système de ressort (1) est réalisé sous la forme d'une combinaison d'un système à ressort pneumatique, comprenant au moins un ressort pneumatique (4) et/ou un système d'amortissement visqueux (18) et un système de ressort mécanique avec au moins un ressort mécanique, en particulier un système de ressort hélicoïdal,
le ressort pneumatique ou les ressorts pneumatiques (4) et/ou les éléments d'amortissement du système d'amortissement visqueux (8) et le ressort ou les ressorts mécanique(s) sont choisis de telle manière que les caractéristiques d'amortissement du système à ressort pneumatique et/ou du système d'amortissement visqueux (18) et du système de ressort mécanique par rapport à une application de force standardisée au système de ressort (1) se chevauchent partiellement.

2. Système de ressort (1) selon la revendication 1, dans lequel le système de ressort (1) comprend le système de ressort mécanique et le système de ressort mécanique est conçu et/ou agencé pour supporter la charge principale et/ou pour une stabilisation horizontale.

3. Système de ressort (1) selon la revendication 1 ou 2, dans lequel le système de ressort (1) comprend le système à ressort pneumatique et dans lequel le système à ressort pneumatique est conçu et/ou agencé pour absorber et/ou commander en boucle fermée des charges variables.

4. Système de ressort (1) selon l'une des revendications précédentes, dans lequel le système de ressort (1) comprend le système à ressort pneumatique, comprenant une alimentation en air comprimé (11) pour alimenter le système à ressort pneumatique en air comprimé, en particulier une alimentation en air comprimé (11) pouvant être commandée en boucle ouverte et/ou fermée au moyen d'un dispositif de commande en boucle ouverte et/ou fermée (12).

5. Système de ressort (1) selon la revendication 4, dans lequel le système de ressort (1) comprend le système à ressort pneumatique et dans lequel l'alimentation en air comprimé (11) pour le ressort pneumatique (4) comprend un élément de réglage (13), par exemple une soupape, pour régler l'apport d'air comprimé, qui peut être commandé en boucle ouverte et/ou fermée, en particulier au moyen du dispositif de commande en boucle ouverte et/ou fermée (12).

6. Système de ressort (1) selon l'une des revendications précédentes, dans lequel le système de ressort (1) comprend le système à ressort pneumatique et le système à ressort pneumatique est ajustable en hauteur automatiquement, en particulier par une commande en boucle ouverte ou fermée de l'alimentation en air comprimé (11), et/ou dans lequel le système de ressort mécanique, en particulier le ressort mécanique, est ajustable en hauteur manuellement.

7. Système de ressort (1) selon l'une des revendications précédentes, dans lequel le système de ressort (1) comprend le système à ressort pneumatique et dans lequel le système à ressort pneumatique est conçu et/ou disposé pour un réglage en hauteur, en particulier de telle manière que le niveau de hauteur reste substantiellement égal en cas de charges variables.

8. Système de ressort (1) selon l'une des revendications précédentes, dans lequel le système de ressort (1) comprend le système à ressort pneumatique et dans lequel le ressort pneumatique (4) prend la forme d'un ressort pneumatique à soufflet, d'un ressort pneumatique à soufflet déroulant à ceinture, d'un ressort pneumatique à soufflet déroulant ou d'un ressort pneumatique à membrane.

9. Système de ressort (1) selon l'une des revendications précédentes, dans lequel le système de ressort (1) comprend le système à ressort pneumatique et dans lequel le ressort pneumatique (4) comprend une plaque de couverture (8) et un piston (9), un soufflet (9) étant disposé entre la plaque de couverture (8) et le piston (9), le soufflet comprenant en particulier un matériau élastique, par exemple un matériau élastomère dans lequel est vulcanisée une ceinture en fil métallique.

10. Système de ressort (1) selon l'une des revendications précédentes, dans lequel le système de ressort (1) comprend le système à ressort pneumatique et dans lequel la rigidité horizontale du système à ressort pneumatique est inférieure ou égale à la rigidité verticale du système à ressort pneumatique.

11. Système de ressort (1) selon l'une des revendications précédentes, dans lequel la rigidité horizontale du système de ressort est supérieure ou égale à la rigidité verticale du système de ressort (1), et/ou
le taux d'amortissement du système de ressort (1) dans la direction verticale est ajustable de manière variable, en particulier apte à être commandé en boucle ouverte et/ou fermée.

12. Système de ressort (1) selon l'une des revendications précédentes comprenant le système d'amortissement visqueux (18) pour un amortissement proportionnel à la vitesse au moyen d'un fluide d'amortissement, le système d'amortissement visqueux comportant un taux d'amortissement variable.

13. Utilisation du système de ressort (1) selon l'une des revendications précédentes pour un montage amortissant des vibrations d'une machine, d'une installation, d'un banc d'essai (2), de fondations d'une machine et/ou d'un bâtiment.

14. Utilisation du système de ressort (1) selon la revendication 13, où le système de ressort (1) comprend le système à ressort pneumatique, l'alimentation en air comprimé (11) et le dispositif de commande en boucle ouverte et/ou fermée (12), comprenant la commande en boucle fermée et/ou ouverte de l'alimentation en air comprimé (11), de telle manière que le niveau de hauteur de la charge est ajusté et/ou commandé en boucle ouverte et/ou fermée, en particulier maintenu constant pendant le fonctionnement.
